# EUROPÄISCHE PATENTSCHRIFT

(11) **EP 1 185 804 B1**
(45) Veröffentlichungstag und Bekanntmachung des Hinweises auf die Patenterteilung: **20.11.2002**
(21) Anmeldenummer: 00931154.9
(22) Anmeldetag: 10.05.2000
(51) Int. Cl.: F16H 7/12

(54) **RIEMENTRIEB EINER BRENNKRAFTMASCHINE**
INTERNAL COMBUSTION ENGINE BELT DRIVE
ENTRAINEMENT PAR COURROIE D'UN MOTEUR A COMBUSTION INTERNE

(30) Priorität: 11.06.1999 DE 19926612
(43) Veröffentlichungstag der Anmeldung: 13.03.2002
(73) Patentinhaber: INA-Schaeffler KG, 91074 Herzogenaurach (DE)
(72) Erfinder: BOGNER, Michael, D-90542 Eckental (DE); BERGER, Rudolf, D-52152 Simmerath (DE)
(86) Internationale Anmeldenummer: EP0004152
(87) Internationale Veröffentlichungsnummer: WO00077421

(56) Entgegenhaltungen:
- EP-A- 0 757 190
- DE-A- 3 939 821
- DE-A- 4 118 901
- DE-A- 4 243 451
- FR-A- 2 781 008
- GB-A- 1 585 624

## Beschreibung

### Gebiet der Erfindung

Die vorliegende Erfindung betrifft einen Riementrieb einer Brennkraftmaschine. Insbesondere betrifft die Erfindung solche Riementriebe, bei denen im Riementrieb ein sog. Starter-Generator angeordnet ist. Derartige Starter-Generatoren übernehmen zwei Funktionen: Erstens das Starten der Brennkraftmaschine und zweitens das Erzeugen von elektrischen Strom während des Betriebs der Brennkraftmaschine. Aufgrund der doppelten Funktion des Starter-Generators wechseln Lasttrum und Leertrum im Riementrieb, je nach Betriebsmodus des Starter-Generators. Sämtliche im Riementrieb üblicherweise angeordneten Hilfsaggregate, wie beispielsweise Wasserpumpe oder Servopumpe, können elektrisch betrieben werden mit der von dem Starter-Generator erzeugten elektrischen Energie. Es ist denkbar, daß im Riementrieb lediglich die Kurbelwellen-Riemenscheibe und die Riemenscheibe des Starter-Generators angeordnet sind.

### Hintergrund der Erfindung

Bei einem derartigen Riementrieb können Spanneinrichtungen zum Einsatz kommen, die zwei Spannarme aufweisen. Jeder Spannarm ist gegen je ein Trum des Riemens angefedert. Aus der DE 42 43 451 A1, die als nächstliegender Stand der Technik angesehen wird, bespieisweise ist eine Spanneinrichtung für Zugmittel wie Riemen oder Ketten bekannt geworden, bei der zwei auf einer gemeinsamen Drehachse schwenkbar angeordnete Spannarme vorgesehen sind, die gegen je ein Trum des Riemens angefedert sind. Diese bekannte Spanneinrichtung ist jedoch für den Einsatz in einem Riementrieb mit Starter-Generator ungeeignet, da beide Spannarme während des Betriebs der Brennkraftmaschine ohne Relatiwerschiebung zueinander gemeinsam um die Drehachse schwenken können. So besteht die Gefahr, daß sich das Gesamtsystem durch dynamische Anregung im Bereich der Eigenfrequenz stark aufschwingen könnte, was wiederum die Funktion des Spannsystems beeinträchtigen würde.

### Aufgabe der Erfindung

Aufgabe der vorliegenden Erfindung ist es daher, diese Nachteile zu vermeiden.

### Zusammenfassung der Erfindung

Mit der Erfindung wird ein Riementrieb einer Brennkraftmaschine vorgeschlagen, an deren Kurbelwelle eine erste Riemenscheibe aufgenommen ist, mit einem Starter-Generator, an dessen Welle eine zweite Riemenscheibe aufgenommen ist, mit einem Riemen, insbesondere Zahnriemen oder Keilrippenriemen, der die beiden Riemenscheiben umschlingt, mit einer Spanneinrichtung, deren zwei Spannarme je ein sich zwischen einander benachbarten Riemenscheiben erstreckendes, entweder als Lasttrum oder als Leertrum arbeitendes Trum des Riemens belasten, wobei die beiden Spannarme jeweils um eine Drehachse schwenken, die vorzugsweise innerhalb der von dem Riemen umspannten Fläche angeordnet sind, und wobei an den Spannarmen aufgenommene Spannrollen vorzugsweise außerhalb dieser umspannten Fläche angeordnet und gegen den Riemen angefedert sind, wobei der jeweils im Lasttrum angeordnete Spannarm unter der Riemenkraft in eine Anschlagposition angedrückt wird.

Die Erfindung nutzt den Effekt aus, daß im Lasttrum eine höhere resultierende Riemenkraft als im Leertrum wirksam ist. Der erfindungsgemäße Riementrieb ist nun so ausgelegt, daß unter dieser erhöhten resultierenden Riemenkraft im Lasttrum der jeweilige Spannarm in diese Anschlagposition hineingedrückt und dort gehalten wird. Das bedeutet, daß die an diesem Spannarm angeordnete Spannrolle lediglich als Umlenkrolle arbeitet. Das bedeutet weiterhin, daß lediglich der im Leertrum angeordnete Spannarm bestimmungsgemäß arbeitet.

Diese Anschlagposition ist nach einer vorteilhaften erfindungsgemäßen Variante dadurch gebildet, daß ein Abstand zwischen der Drehachse des Spannarms und der Anlage der Spannrolle an den Riemen kleiner ist als ein lotrechter Abstand dieser Drehachse und einer Tangente, die die beiden einander benachbarten Riemenscheiben tangiert. Wird ein Trum des Riemens zum Lasttrum, nähert sich dieses Trum der beschriebenen Tangente an, wobei der wirksame Hebelarm, der gemeinsam mit der resultierenden Riemenkraft ein entgegen der Spannfeder gerichtetes Drehmoment erzeugt, kleiner wird. Der Spannarm wird demzufolge in eine Totpunktlage gefahren, in der kein oder jedenfalls nur ein sehr geringer Hebelarm für die resultierende Riemenspannkraft wirksam ist. Das bedeutet, daß die resultierende Riemenkraft lediglich als Zugkraft in diesem Spannarm wirkt. In anderen Worten ausgedrückt: Die Drehachse des Spannarms wird in dem Riementrieb so angeordnet, daß der Spannarm unter der resultierenden Riemenkraft im Lasttrum soweit verschwenkt wird, bis die resultierende Riemenkraft mit dem Spannarm wenigstens annähernd in einer Flucht liegt.

Der erfindungsgemäße Riementrieb kann Hilfsaggregate oder Umlenkrollen umfassen. Vorzugsweise ist jedoch lediglich der Starter-Generator im Riementrieb angeordnet.

Anstelle der beschriebenen Totpunktlage des Spannarms kann auch ein gestellfester Anschlag vorgesehen sein, an den der im Lasttrum angeordnete Spannarm unter der resultierenden Riemenkraft angedrückt und gehalten wird. Das bedeutet, daß auch bei dieser erfindungsgemäßen Weiterbildung sichergestellt ist, daß die Spannrolle im Lasttrum als quasistarre Umlenkrolle arbeitet.

Eine erfindungsgemäße Weiterbildung sieht vor, daß beide Spannarme um eine gemeinsame Drehachse schwenken. Auf diese Weise ist eine raumsparende Anordnung sichergestellt. Selbstverständlich sind erfindungsgemäße Abwandlungen denkbar, wonach die beiden Drehachsen der beiden Spannarme voneinander beabstandet sind.

Da die beiden Spannrollen vorzugsweise außerhalb der von dem Riemen umspannten Fläche angeordnet sind, kann eine zwischen den beiden Spannarmen wirkende Spannfeder vorgesehen sein, die die beiden Spannarme aufeinander zu drückt.

### Kurze Beschreibung der Zeichnungen

Nachstehend wird die Erfindung anhand von einem in zwei Figuren dargestellten Ausführungsbeispiel näher erläutert. Es zeigen:
- Figur 1: einen erfindungsgemäßen Riementrieb in einer Startphase der Brennkraftmaschine und
- Figur 2: den erfindungsgemäßen Riementrieb aus Figur 1 während des Betriebs der Brennkraftmaschine.

### Ausführliche Beschreibung der Zeichnungen

In einem Riementrieb einer Brennkraftmaschine ist eine Kurbelwelle 1 und ein Starter-Generator 2 vorgesehen. Die Kurbelwelle 1 trägt eine erste Riemenscheibe 3 und die nicht dargestellte Welle des Starter-Generators 2 trägt eine zweite Riemenscheibe 4. Ein Riemen 5 umschlingt die beiden Riemenscheiben 3, 4. Weiterhin ist eine Spanneinrichtung 6 vorgesehen, die zwei Spannarme 7, 8 umfaßt. Jeder Spannarm 7, 8 trägt an seinem Ende eine Spannrolle 9, 10. Beide Spannarme 7, 8 sind um eine gemeinsame Drehachse 11 schwenkbar angeordnet. Während die Drehachse 11 innerhalb der von dem Riemen 5 umspannten Fläche angeordnet ist, sind die beiden Spannrollen 9, 10 außerhalb des Riemens 5 angeordnet.

Zwischen beiden Spannarmen 7, 8 wirkt eine nicht weiter dargestellte Spannfeder, die einerseits an dem einen Spannarm 7 und andererseits an dem anderen Spannarm 8 abgestützt ist und die die beiden Spannarme 7, 8 gegen den Riemen 5 anfedert.

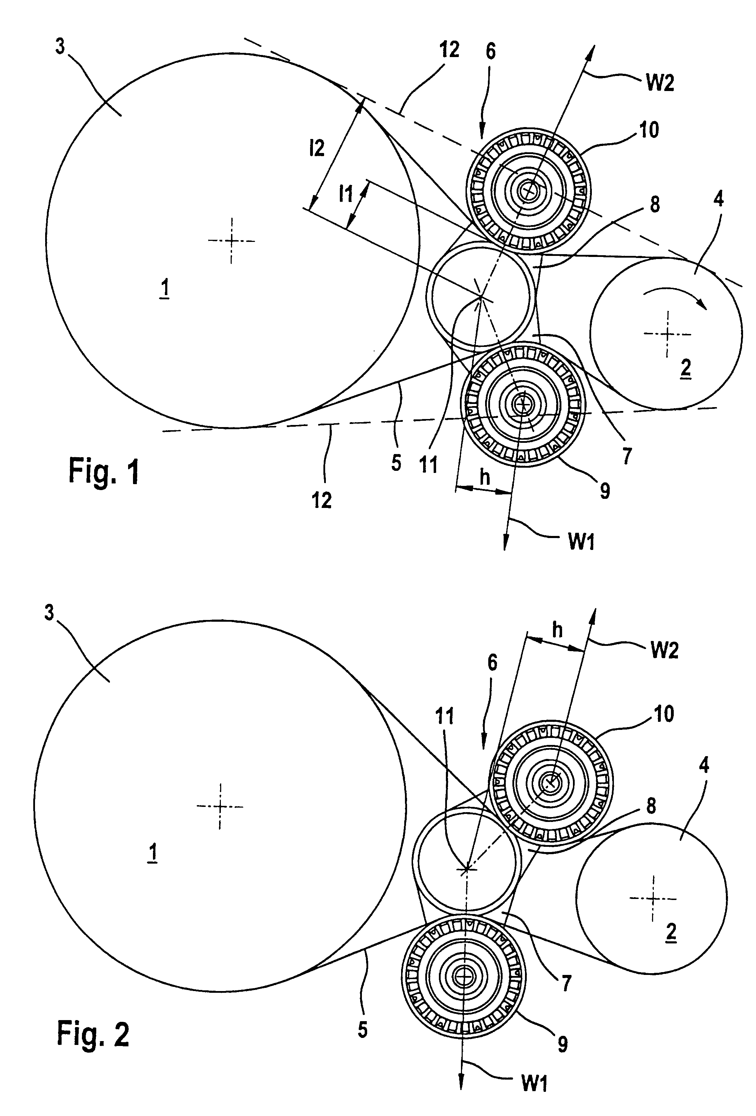

Der Figur 1 ist zu entnehmen, daß ein Abstand I₁ zwischen der Drehachse 11 der Spannarme 7, 8 und der Anlage der Spannrolle 10 bzw. 9 an den Riemen 5 kleiner ist als ein Abstand I₂ zwischen dieser Drehachse 11 und einer Tangente 12, die die beiden Riemenscheiben 3, 4 tangiert.

Der Starter-Generator 2 dreht im Uhrzeigersinn. Während des Startvorganges wird daher das Trum des Riemens 5, gegen das der Spannarm 8 angefedert ist, zum Lasttrum. Das bedeutet, daß die resultierende Riemenkraft W2 viel größer ist als die Riemenkraft W1 im Leertrum, gegen das der Spannarm 7 angefedert ist.

Der Figur 1 ist zu entnehmen, daß die Wirklinie W2 der resultierenden Riemenkraft wenigstens näherungsweise fluchtet mit der Symmetrielinie des Spannarms 8. Das bedeutet, daß kein Hebelarm mehr vorhanden ist, an dem die resultierende Riemenkraft W2 angreifen und demzufolge den Spannarm 8 weiterschwenken könnte.

Dagegen wirkt im Leertrum die resultierende Riemenkraft W1, die mit ihrem effektiven Hebelarm h ein Drehmoment erzeugt, das entgegen der Kraft der Spannfeder gerichtet ist.

In der Situation gemäß Figur 1 arbeitet die Spannrolle 10 demzufolge als starre Umlenkrolle.

Figur 2 zeigt nun den Betrieb der Brennkraftmaschine, das bedeutet, daß der Starter-Generator 2 elektrischen Strom erzeugt, wobei die Kurbelwelle 1 antreibt. In dieser Situation sind Leer- und Lasttrum miteinander vertauscht. Während nun für die resultierende Riemenkraft W1 kein effektiver Hebelarm zur Verfügung steht, erzeugt die resultierende Riemenkraft W2 gemeinsam mit dem Hebel h ein an dem Spannarm 8 angreifendes Drehmoment, das entgegen der Kraft der Spannfeder gerichtet ist. In dieser Situation arbeitet die Spannrolle 9 als starre Umlenkrolle, da die resultierende Riemenkraft W1 mit der Symmetrielinie des Spannarms 7 fluchtet.

Die vorteilhafte Totpunktlage wirkt demzufolge wie ein Anschlag für die Spannarme 7, 8. Die beschriebene Auslegung der Längenverhältnisse von I₁ zu I₂ ermöglichen das Anfahren der Spannarme 7, 8 in die beschriebene Totpunktlage.

### Bezugszeichen

- 1: Kurbelwelle
- 2: Starter-Generator
- 3: erste Riemenscheibe
- 4: zweite Riemenscheibe
- 5: Riemen
- 6: Spanneinrichtung
- 7: Spannarm
- 8: Spannarm
- 9: Spannrolle
- 10: Spannrolle
- 11: Drehachse
- 12: Tangente

## Patentansprüche

1. Riementrieb einer Brennkraftmaschine, an deren Kurbelwelle (1) eine erste Riemenscheibe (3) aufgenommen ist, mit einem Starter-Generator (2), an dessen Welle eine zweite Riemenscheibe (4) aufgenommen ist, mit einem Riemen (5), insbesondere Zahnriemen oder Keilrippenriemen, der die beiden Riemenscheiben (3, 4) umschlingt, mit einer Spanneinrichtung (6), deren zwei Spannarme (7, 8) je ein sich zwischen einander benachbarten Riemenscheiben (3, 4) erstreckendes, entweder als Lasttrum oder als Leertrum arbeitendes Trum des Riemens (5) belasten, wobei die beiden Spannarme (7, 8) jeweils um eine Drehachse (11) schwenken, und wobei an den Spannarmen (7, 8) vorgesehene Spannrollen (9, 10) gegen den Riemen (5) angefedert sind, wobei der jeweils im Lasttrum angeordnete Spannarm (7, 8) unter der Riemenkraft in eine Anschlagposition angedrückt wird.

2. Riementrieb nach Anspruch 1, bei der die Anschlagposition dadurch gebildet ist, daß ein Abstand (I1) zwischen der Drehachse (11) des Spannarms (7, 8) und der Anlage der Spannrolle (9, 10) an dem Riemen (5) kleiner ist als ein Abstand (I2) zwischen dieser Drehachse (11) und einer Tangente (12), die die zwei einander benachbarten Riemenscheiben (3, 4) tangiert.

3. Riementrieb nach Anspruch 1, bei der ein gestellfester Anschlag vorgesehen ist, gegen den der im Lastrum angeordnete Spannarm (7, 8) unter der Riemenkraft angedrückt wird.

4. Riementrieb nach Anspruch 1, bei der beide Spannarme (7, 8) um eine gemeinsame Drehachse (11) schwenken.

5. Riementrieb nach Anspruch 1, bei der eine zwischen den beiden Spannarmen (7, 8) wirkende Spannfeder vorgesehen ist, die die beiden Spannarme (7, 8) aufeinander zudrückt.

## Claims

1. Belt drive of an internal combustion engine on the crankshaft (1) of which is accommodated a first belt pulley (3), with a starter generator (2) on the shaft of which is accommodated a second belt pulley (4), with a belt (5), particularly a cog belt or V-rib belt, which loops around the two belt pulleys (3, 4), with a tensioning device (96) the two tension arms (7, 8) of which each bear on a run of the belt (5) acting either as a loaded run or as a return run, the two tension arms (7, 8) each pivoting about a rotation axis (11), while tension rollers (9, 10) provided on the tension arms (7, 8) are resiliently biased against the belt (5), the particular tension arm (7, 8) which is disposed in the loaded run being pressed into a position of abutment by the force of the belt.

2. Belt drive according to claim 1, wherein the position of abutment is formed by the fact that a spacing (I₁) between the rotation axis (11) of the tension arm (7, 8) and the abutment of the tension roller (9, 10) on the belt (5) is less than a spacing (I₂) between this rotation axis (11) and a tangent (12) to the two adjacent belt pulleys (3, 4).

3. Belt drive according to claim 1, wherein an abutment is provided, fixed to the frame, against which the tension arm disposed in the loaded run is pressed by the force of the belt.

4. Belt drive according to claim 1, wherein the two tension arms (7, 8) pivot about a common rotation axis (11).

5. Belt drive according to claim 1, wherein a tension spring operating between the two tension arms (7, 8) is provided, which presses the two tension arms (7, 8) towards each other.

## Revendications

1. Entraînement à courroie pour un moteur à combustion interne dont le vilebrequin (1) porte une première poulie à courroie (3), comportant un démarreur-générateur (2) dont l'arbre porte une seconde poulie à courroie (4), ainsi qu'une courroie (5), notamment une courroie dentée ou une courroie trapézoïdale crantée entourant les deux poulies à courroie (3, 4), une installation de tension (6) dont les deux bras tendeurs (7, 8) sollicitent chacun un brin de la courroie (5) entre les deux poulies (3, 4) voisines, l'un étant le brin en charge, l'autre à vide,
les deux bras tendeurs (7, 8) pivotant chacun autour d'un axe de rotation (11) et les galets tendeurs (9, 10) portés par les bras tendeurs (7, 8) étant appuyés élastiquement contre la courroie (5), le bras tendeur (7, 8), associé chaque fois au brin en charge, étant pressé en position de butée par la force de la courroie.

2. Entraînement à courroie selon la revendication 1,
dans lequel
la position de butée est formée en ce que la distance (I₁) entre l'axe de rotation (11) du bras tendeur (7, 8) et l'appui du galet tendeur (9, 10) contre la courroie (5) est inférieure à la distance (12) entre l'axe de rotation (11) et une tangente (12) touchant les deux poulies à courroie (3, 4).

3. Entraînement à courroie selon la revendication 1,
dans lequel
il est prévu une butée solidaire du bâti contre laquelle est pressé le bras tendeur (7, 8) associé au brin en charge sous l'effet de la force de la courroie.

4. Entraînement à courroie selon la revendication 1,
dans lequel
les deux bras tendeurs (7, 8) pivotent autour d'un axe de rotation commun (11).

5. Entraînement à courroie selon la revendication 1,
dans lequel
il est prévu un ressort de tension agissant entre les deux bras tendeurs (7, 8) et qui presse l'un contre l'autre les deux bras tendeurs (7, 8).
